Europäisches Patentamt

European Patent Office

Office européen des brevets

(19)

(11) **EP 1 329 425 A1**

(12) **EUROPEAN PATENT APPLICATION**

(43) Date of publication:
   **23.07.2003 Bulletin 2003/30**

(51) Int Cl.$^7$: **C02F 1/44**, B01D 61/02

(21) Application number: **02250358.5**

(22) Date of filing: **18.01.2002**

(84) Designated Contracting States:
   **AT BE CH CY DE DK ES FI FR GB GR IE IT LI LU
   MC NL PT SE TR**
   Designated Extension States:
   **AL LT LV MK RO SI**

(71) Applicant: **TORAY INDUSTRIES, INC.**
   **Tokyo 103-8666 (JP)**

(72) Inventors:
   • **Kihara, Masahiro**
     **Otsu-shi, Shiga 520-0842 (JP)**

   • **Nakanishi, Takayuki**
     **Otsu-shi, Shiga 520-0842 (JP)**
   • **Kitade, Tamotsu**
     **Nishinomiya-shi, Hyogo 663-8113 (JP)**

(74) Representative: **Coleiro, Raymond et al**
   **MEWBURN ELLIS**
   **York House**
   **23 Kingsway**
   **London WC2B 6HP (GB)**

(54) **Desalination method and desalination apparatus**

(57)   In a method of desalinating water, especially sea water, a plurality of membrane module units (3,9) are disposed at respective successive stages. Permeated water (6) from a first stage membrane module unit (3) is supplied to a second stage membrane module unit (9) to obtain permeated water (11). The method comprises: a step for processing feed water (1) in which at least a proportion of feed water is treated with the first stage membrane module unit (3) and optionally mixed with additional feed water to obtain processed water (8) having a total salt concentration thereof to 65 to 90% of that of the feed water and a calcium ion concentration thereof to 70% or less thereof; and a subsequent step for supplying the processed water (8) obtained in the first step to the second stage membrane module unit (9), thereby obtaining the desalinated water.
   An apparatus for carrying out the above method comprises at least first and second membrane module units (3,9) at respective successive first and second stages for water permeation,

   as a said first membrane unit (3) at the first stage, a nanofiltration membrane module unit having a membrane module and an outlet channel for water permeated thereby,
   as a said second membrane unit (9) at the second stage, a reverse osmosis membrane module unit disposed in the outlet channel of the nanofiltration membrane module unit (3), for permeated water; and
   means (5) for diverting a proportion of feed water supplied to the nanofiltration membrane module unit (3) directed to the said outlet channel thereof so as to bypass the membrane module thereof.

Fig. 1

**Description**

The present invention relates to a desalination method and desalination apparatus using membrane module units, especially a nanofiltration membrane and reverse osmosis membrane, suitably used for producing freshwater from seawater with a high recovery ratio.

In recent years, technology for obtaining industrial water or drinking water from liquids such as seawater or highly concentrated brackish water has advanced, and seawater desalination methods using reverse osmosis membranes have come into focus instead of vaporizing methods which conventionally have been commonly performed. Applications in various fields are anticipated for such reverse osmosis membrane seawater desalination, since the amount of energy needed for producing fresh water is little, and high-quality fresh water can be obtained.

In the case of normal reverse osmosis seawater desalination, a high-pressure pump is used to pressurize seawater supplied to a reverse osmosis membrane module to around 6.0 to 6.5 MPa, thereby obtaining permeated water (fresh water), but the recovery ratio (percentage of recovery) of fresh water from the supplied seawater in this case is around 40% at the most. "Fresh Water" should meet the drinking water standard which has a total dissolved solute of 500 ppm or less. "Recovery ratio" is the ratio of the volume of fresh water produced per unit volume of feed water processed by the desalination apparatus. For seawater desalination, the feed water is seawater.

In seawater desalination, the fresh water recovery ratio directly contributes to the desalination costs, so the higher the recovery ratio is, the better. However, there has been a limit on actually increasing the recovery ratio with normal reverse osmosis seawater desalination. That is, in order to raise the recovery ratio, extremely high pressure is necessary. This leads to a problem in that the difference between the osmotic pressure of the sea water and the driving pressure (i.e., the effective pressure) becomes too great at elements upstream of modules with low salinity in the supplied water, the amount of permeated water at the reverse osmosis membrane becomes too great and foreign components (suspended matter) contained in the supplied water rapidly clogs the reverse osmosis membrane, thereby deteriorating performance.

In order to solve the above problem, JP-A-08-108048 discloses an arrangement comprising multiple stages of reverse osmosis membrane modules wherein the pressure of concentrate water from a first stage reverse osmosis membrane module is boosted and supplied to a second stage reverse osmosis membrane module, while operating such that the effective pressure at each stage does not become excessive, thereby providing means for performing seawater desalination with a high recovery ratio while preventing deterioration in the performance of the reverse osmosis membrane. According to this arrangement, operating with the pressure at the first stage reverse osmosis membrane module at around 6.5 MPa and the pressure at the second stage reverse osmosis membrane module at around 9.0 MPa for example, allows fresh water to be obtained from seawater of 3.5% salinity with a stable recovery ratio of 60%.

However, even when using the above method described in JP-A-08-108048, around 60% is the upper limit for the fresh water recovery ratio. This is due to two reasons. Firstly, raising the fresh water recovery ratio increases the concentrate seawater concentration at the reverse osmosis membrane, and the concentation of so-called scale components contained in the seawater such as calcium sulfate exceeds the dissolution limit for material balance at around 65% recovery ratio, resulting in precipitation of such scale components as scales on the reverse osmosis membrane, thereby clogging the membrane. Secondly, increased osmotic pressure due to the increase in the salinity requires even higher pressure than the 9.0 MPa for operation of the second stage membrane module.

Accordingly, the present invention addresses the above-described problems with the conventional art, and seeks to provide a desalination method and desalination apparatus for producing freshwater from seawater with an even higher recovery ratio, in a stable manner.

To this end, the present invention provides a method of desalinating water in a plurality of (i.e. at least two) stages at which respective membrane module units are disposed, wherein permeate water from a first stage membrane module unit is supplied to a second stage membrane module unit to obtain desalinated permeate water therefrom, the method comprising: a first step of processing feed water having a total salt concentration of 3.0 to 4.8 % by weight and calcium ion concentration of 200 to 500 mg/l, in which first step at least a proportion of the feed water is treated with the first stage membrane module unit, to obtain the permeate water and which permeate water is optionally mixed with additional feed water, the water thus processed in the first step thereby having a total salt concentration of 55 to 90% of that of the feed water and a calcium ion concentration of 95% or less of that of the feed water; and a second step of supplying the water processed by the first step to the second stage membrane module unit, thereby obtaining the desalinated water.

Preferred embodiments of the invention will now be described with reference to the accompanying drawings in which:

Fig. 1 is a flowchart of a desalination apparatus illustrating an embodiment of the present invention;
Fig. 2 is a flowchart of a desalination apparatus illustrating in detail another embodiment of the present invention;

Fig. 3 is a flowchart illustrating the configuration of a reverse osmosis membrane module unit which is a modification of the embodiment of the present invention shown in Fig. 2; and

Fig. 4 is a flowchart illustrating another configuration of a reverse osmosis membrane module unit which is another modification of the embodiment of the present invention shown in Fig. 2.

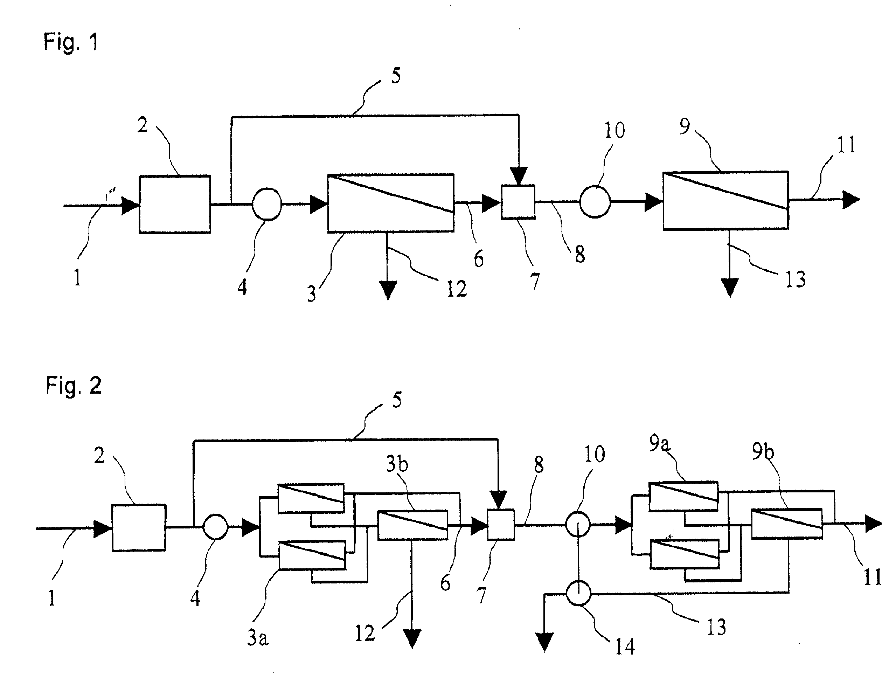

In Figs. 1 to 4, the following reference numerals are employed:

1: Seawater flow
2: Clarifying means
3: Nanofiltration membrane module unit
3a: First stage nanofiltration membrane module component
3b: Second stage nanofiltration membrane module component
4: Pressurizing pump
5: Feed water bypass channel
6: Permeate water flow from nanofiltration membrane module unit
7: Mixer
8: Flow of water supplied to reverse osmosis membrane module unit
9: Reverse osmosis membrane module unit
9a: First stage reverse osmosis membrane module component
9b: Second stage reverse osmosis membrane module component
10: High-pressure pump
11: Flow of permeate water from reverse osmosis membrane module unit
12: Flow of concentrate waste water from nanofiltration membrane module unit
13: Flow of concentrate waste water from reverse osmosis membrane module unit
14: Energy recovery means
15: Flow concentrate water from first stage reverse osmosis membrane module
16: Pressure boosting means
17: Scale prevention agent injecting means

In the desalination method according to the present invention, any membrane capable of adjusting the concentration of salt and calcium ions is sufficient for the membrane module unit disposed in multiple stages, examples of which include reverse osmosis membranes, ion exchange membranes and charge mosaic membranes, but suitably used, especially for the first stage, is a nanofiltration membrane unit which has good separation efficiency and can be operated at relatively low pressure. In addition, suitably used for the second stage is a reverse osmosis membrane unit which is capable of a high percentage salt removal and providing a large amount of permeated water.

The first stage nanofiltration membrane module unit may itself have a plurality of (i.e. at least two) module components disposed in a plurality of respective sub-stages, whereby concentrate water from a first sub-stage nanofiltration membrane module component is supplied to a second sub-stage nanofiltration membrane module component to obtain permeate water. Likewise, a reverse osmosis membrane module having a plurality of module components disposed in a plurality of respective sub-stages may be employed as a second stage reverse osmosis membrane module unit, wherein concentrate water from a first sub-stage reverse osmosis membrane module component is supplied to a second sub-stage reverse osmosis membrane module component to obtain permeate water. It is particularly preferable to boost the pressure of concentrate water from the first sub-stage reverse osmosis membrane module component prior to supplying the concentrate water to the second sub-stage reverse osmosis membrane module component to obtain permeate water. Furthermore, the relation between the operating pressure $P(n)$ of the first sub-stage reverse osmosis membrane module component and the operating pressure $P(n + 1)$ of the second sub-stage reverse osmosis membrane module component is preferably in a range given by the expression

$$1.15 \leq P(n + 1) / P(n) \leq 1.8.$$

In the above-described desalination method, injecting a scale prevention agent into the water supplied to the nanofiltration membrane module unit before performing nanofiltration is preferable, since generation of calcium sulfate scales which occur when using a nanofiltration membrane with high calcium ion removal ratio can be prevented and the recovery ratio can be increased.

In addition, using filtered water processed with a microfiltration or ultrafiltration membrane as the supplied feed water is preferable, since deterioration in performance due to soiling of the nanofiltration membrane can be alleviated.

With this desalination method according to the present invention, 30 to 100%, more preferably 35 to 95%, and even more preferably 40 to 90% of the amount of the feed water may be treated with the first stage membrane module unit, and then mixed with the untreated feed water and supplied to the second stage membrane module unit.

Moreover, according to the present invention, the desalination method is preferably carried out such that the percentage amount of permeate water obtained by, based on the amount of water supplied to, the first stage membrane module unit is within the range of 65% to 95%, more preferably 75 to 90%, and even more preferably such that the percentage amount of permeate water obtained by, based on the amount of water supplied to, the second stage membrane module unit is within the range of 70 to 85%.

Furthermore, the desalination method is preferably carried out such that the percentage of amount of permeated water from the second stage membrane module unit, based on the total amount of feed water (so-called total recovery ratio) is within the range of 60% to 80%, and more preferably 65 to 75%.

Moreover, in order to realize the above-described desalination method, desalination apparatus according to the present invention comprises:

at least first and second membrane module units at respective successive first and second stages for water permeation,

as a said first membrane unit at the first stage, a nanofiltration membrane module unit having a membrane module and an outlet channel for water permeated thereby,

as a said second membrane unit at the second stage, a reverse osmosis membrane module unit disposed in the outlet channel of the nanofiltration membrane module unit, for permeated water;

means for diverting a proportion of feed water supplied to the nanofiltration membrane module unit directed to the said outlet channel thereof so as to bypass the membrane module thereof; and (preferably)

means, in the said outlet channel, for mixing the said proportion of feed water with water permeated by the nanofiltration membrane module at the first stage upstream of the reverse osmosis membrane module unit at the second stage.

A preferred apparatus in accordance with the invention comprises:

a first stage membrane module unit, a nanofiltration membrane module unit, more preferably such a unit having a plurality of module components in a plurality of respective sub-stages,

a second stage membrane module unit as a reverse osmosis membrane module unit, also having a plurality of module components in a plurality of respective sub-stages, and disposed in the permeated water channel of the nanofiltration membrane module unit,

means for bypassing a proportion of the feed water supplied to the nanofiltration membrane module unit and (more preferably)

means for mixing the by-passed feed water with the permeated water from the nanofiltration membrane module unit, the mixing means being disposed in a supply channel for the reverse osmosis membrane module unit.

In the above-described desalination apparatus, more preferably, the first stage nanofiltration membrane module unit has a plurality of module components at respective sub-stages, and a second sub-stage nanofiltration membrane module component is disposed in a concentrate water channel of a first sub-stage nanofiltration membrane module component. As explained below, at each respective sub-stage, there is at least one module component but at any sub-stage, especially the first sub-stage, there may be a plurality of module components in parallel with one another. Furthermore, the relation between the total membrane surface area $S1(n)$ of the or each first sub-stage nanofiltration membrane module component and the total membrane surface area $S1(n + 1)$ of the or each second sub-stage nanofiltration membrane module component is preferably in a range given by the expression

$$1.5 \leq S1(n) / S1(n + 1) \leq 5.$$

Likewise, the second stage reverse osmosis membrane module unit more preferably has a plurality of module components disposed at respective sub-stages such that a second sub-stage reverse osmosis membrane module component is disposed in a concentrate water channel of a first sub-stage reverse osmosis membrane module component. As explained below, at each respective sub-stage, there is at least one module component but at any sub-stage, especially the first sub-stage, there may be a plurality of module components in parallel with one another. Furthermore, the relation between the total membrane surface area $S2(n)$ of the or each first sub-stage reverse osmosis membrane module component and the or each membrane surface area $S2(n + 1)$ of the second sub-stage reverse osmosis membrane module component is preferably in a range given by the expression

$$1.67 \leq S2(n) / S2(n + 1) \leq 2.5.$$

Moreover, boosting means for boosting the pressure of concentrate water are preferably disposed in the concentrate water channel of the reverse osmosis membrane module components or each of a plurality of reverse osmosis membrane module components, upstream of the final reverse osmosis membrane component.

In addition, scale prevention agent injecting means are preferably disposed in the supplied feed water channel of the nanofiltration membrane module unit.

Furthermore, a microfiltration membrane module unit or an ultrafiltration membrane module unit is preferably disposed in the supplied feed water channel of the nanofiltration membrane module unit.

Embodiments of the present invention will now be described with reference to the drawings. An embodiment of the desalination apparatus according to the present invention will be described with reference to Fig. 1. In Fig. 1, the desalination apparatus comprises a clarifying device 21 for removing suspended matter from seawater which is the feed water (flow line 1), a nanofiltration membrane module unit 3 and a pressurizing pump 4 for pressurizing the supplied feed water for the nanofiltration membrane module unit 3, a bypass channel 5 for bypassing a part of the supplied feed water for the nanofiltration membrane module unit 3, mixing means 7 for mixing permeate water (flow line 6) from the nanofiltration membrane module unit and the bypassed feed water, a reverse osmosis membrane module unit 9 for desalinating supplied water (flow line 8) and obtaining permeate water 11, and a high-pressure pump 10 for pressurizing the supplied water 8 for the reverse osmosis membrane module unit 9. In this embodiment, in each of the respective nanofiltration and reverse osmosis membrane module units, the module is provided by a single module component.

Here, with the first stage nanofiltration membrane module unit 3, either all of the supplied feed water is subjected to nanofiltration processing, or part of the feed water is subjected to nanofiltration processing and the supplied feed water bypassed with the bypass channel 5 is mixed with the permeate water (flow line 6) of the nanofiltration membrane by the mixing means 7. At this time, the total salinity of the supplied water (flow line 8) to the second stage reverse osmosis membrane module unit 9 is adjusted to be 55 to 90% of that of the feed water, the calcium ion concentration likewise is adjusted to 95% or less of that of the feed water. It is preferable also that the sulphate ion concentration is adjusted to 80% or less of that of the feed water, which amount is usually 1500 to 3500 mg/l in seawater.

The reason is that the following advantages may be gained; in the event that the total salinity is within the above range, the osmotic pressure of the supplied water 8 of the second stage reverse osmosis membrane module unit 9 drops, the operating pressure for the reverse osmosis membrane can be set low, so that the electric power consumption of the high-pressure pump 10 can be reduced, and also the pressure load on the reverse osmosis membrane can be reduced, which means that the life of the reverse osmosis membrane can be extended or more permeated water can be obtained with a higher recovery ratio under the same operating pressure. Moreover, in the event that the calcium ion concentration is in the above range, precipitation of calcium sulfate ($CaSO_4$) which leads to scale generation at the reverse osmosis film surface is suppressed even with a high recovery ratio, so the permeate water recovery ratio with the reverse osmosis membrane module unit 9 can be improved.

The type or capabilities of the nanofiltration membrane are not particularly restricted, and any nanofiltration membrane is usable as long as all of the supplied feed water is subjected to nanofiltration membrane processing or part of the feed water is subjected to nanofiltration processing and then mixed with the bypassed supplied feed water, following which the total salinity is 55 to 90% of that of the feed water and the calcium ion concentration is 95% or less of that of the feed water; however, preferably, a nanofiltration membrane formed of materials such as polyamides, polypiperazine amides, polyester amides and cross-linked water-soluble vinyl polymers is used. In addition, with regard to the membrane structure, a membrane is preferably used which has a minute layer on at least one side thereof, having fine holes which gradually enlarge in diameter from the minute layer toward the inside of the membrane or toward the other side of the membrane (i.e., an asymmetrical membrane), or a membrane which has an extremely thin separation-function layer formed on the minute layer of such an asymmetrical membrane with a different material. Furthermore, when selecting a preferred membrane material, it should be borne in mind that a membrane capable of yielding greater amounts of filtered water at lower pressure is more economical. Thus, a polyamide membrane is especially preferred from the perspective of the amount of permeated water and chemical resistance properties and so forth, and a polypiperazine amide membrane is even more preferred.

The nanofiltration membrane may be formed as a spiral-wound element wherein a planar membrane is wound around a collecting tube, a plate-and-frame element wherein components formed of planar membranes stretched over both sides of a plate-shaped supporting plate are layered at predetermined spacing with spacers introduced therebetween to form a module, a tubular element using tube-shaped membrane, or a hollow fiber membrane element wherein hollow fibers are bundled and stored in a case, with one or a plurality being linearly connected and stored in a pressure-resistant vessel. The element may take any of the above forms, but a spiral-wound element is preferably used from the perspective of operability. The number of elements can be arbitrarily set according to the performance of the membrane. In the event of using spiral-wound elements, the number of elements to be set serially in one module is preferably around 4 to 6.

Moreover, with regard to the performance of the nanofiltration membrane element, an arrangement is preferable wherein the percentage removal of salt (TDS (Total Dissolved Solids): evaporation residue) is within the range of 30 to 80%, the percentage of removal of calcium ions is within the range of 20 to 80%, the percentage of removal of sulfuric acid ions is 95% or more, and the film permeate flow is within the range of 0.3 to 1.5 $m^3/m^2/d$, under the conditions of filtering seawater of 3.5% total salinity at 25°C with operating pressure of 1.5 MPa and recovery of 13%, since the total salinity and calcium ion concentration ranges for the supplied water (flow line 6) described above can be readily achieved. Even more preferable is an arrangement wherein the percentage removal of salt is within the range of 35 to 70%, the percentage removal of calcium ions is within the range of 30 to 60%, and the percentage removal of sulfuric acid ions is 97% or more.

The proportional amount of the supplied feed water to be bypassed can be arbitrarily set as long as the total salinity and calcium ion concentration ranges are satisfied for the above-described supplied water (flow line 8), and the greater the amount bypassed is, the less is processed at the nanofiltration film, so the amount of energy (electric power) necessary for the nanofiltration is small. However, on the other hand, in the event that the amount bypassed is too great, there is the need to lower the total salinity of the nanofiltration membrane permeate water in order to adjust the post-mixing total salinity to the above-described range, leading to the need to either raise the operating pressure of the nanofiltration membrane or lower the recovery ratio of the nanofiltration membrane permeate water, which is not economical. Accordingly, a preferable range is to process 30 to 100% of the feed water with a nanofiltration membrane module unit and then mix with the bypassed untreated feed water, more preferably 35 to 95%, and even more preferably 40 to 90%.

The mixing means 7 for mixing the nanofiltration membrane permeate water and the bypassed feed water is not particularly restricted, and may be, for example, a mixing vat provided in the apparatus, or means such as a static mixer.

As for the percentage recovery of the permeate water of the first stage nanofiltration membrane module unit 3, the total salinity of the permeate water obtained is low in the event that recovery is lower, but it becomes difficult to obtain a predetermined amount of water, and accordingly the overall recovery cannot be increased. Moreover, in the event that the recovery is too high, the overall recovery is readily raised, but lowering the salinity of the permeate water of the nanofiltration membrane becomes difficult, and consequently the recovery of the second stage reverse osmosis membrane module unit 9 cannot be raised. Accordingly, the ratio of the amount of permeate water from, to the amount of water supplied to, the nanofiltration membrane module unit 3 is preferably in the range of 65 to 95%, more preferably in the range of 75 to 90%.

Moreover, in order to efficiently operate the first stage nanofiltration membrane module unit 3 with a predetermined percentage recovery, an arrangement such as shown in Fig. 2 is preferably used, wherein multiple nanofiltration membrane module components are disposed in sub-stages, with a first sub-stage nanofiltration membrane module component 3a supplying concentrate water to a second sub-stage nanofiltration membrane module component 3b, thereby obtaining permeate water. In the particular embodiment shown in Fig. 2, two such first sub-stage nanofiltration membrane module components in parallel supply concentrate water to a single sub-stage nanofiltration membrane module component. At this time, the relation between the total membrane surface area S1(n) of each of the first sub-stage nanofiltration membrane module components 3a and the membrane surface area S1(n + 1) of the second sub-stage nanofiltration membrane module component 3b is preferably in a range given by the following expression (1)

$$1.5 \leq S1(n) / S1(n + 1) \leq 5 \qquad (1)$$

As described above, setting the membrane area of the first and second sub-stage nanofiltration membrane module components enables the membrane surface flow speed in the membrane modules to be increased, so deterioration in filtration performance due to concentration polarization phenomena at the nanofiltration membrane surface can be suppressed, thereby enabling the total salinity of the permeate water to be kept low even with high recovery. With ranges other than that specified by the Expression (1), the filtration performance may deteriorate because the membrane surface flow speed which can be secured may be insufficient, or in the event that the flow speed is too fast the pressure loss within the module may become too great, and in this case there is the danger that the module may be deformed or damaged.

As for the number of sub-stages of the nanofiltration membrane modules, the greater is the number the more specifically the membrane surface flow speed can be set at each stage, so the filtering capabilities of the nanofiltration membrane are readily manifested, but needlessly increasing the number makes the unit configuration complicated and increases costs, and accordingly is not economical. From this perspective, a practical number of sub-stages is around 2 to 4.

At any given sub-stage, a plurality of nanofiltration membrane module components may be arranged in parallel and the water supply thereto may be divided between them. For example, as previously explained, in Fig. 2, there are two such module components at the first sub-stage and the concentrate water from each of these is led to a single module component at the second sub-stage. Irrespective of the number of module components at each sub-stage, the permeate from module components in earlier sub-stages preferably by-passes all subsequent module components downstream and is led into a permeate flow line from a final sub-stage module component.

The type of the pressurizing pump 4 for the nanofiltration membrane module unit 3 is not particularly restricted, and various types of pumps can be used, such as centrifugal pumps, volute pumps, turbine pumps and plunger pumps.

Subsequently, at the second reverse osmosis membrane module unit 9, the supplied water (flow line 8) from the first stage nanofiltration membrane module unit 3 is pressurized with the pressurizing pump 10 to a predetermined pressure equal to or greater than the osmosis pressure of the permeate water, desalinated with the reverse osmosis membrane module unit, and separated into permeate water (flow line 11) and concentrate waste water (flow line 13).

Any reverse osmosis membrane will suffice, as long as water can be selectively permeated and permeation of total salt can be prevented. With regard to the membrane structure, an asymmetrical membrane is preferably used which has a minute layer on at least one side thereof, having fine holes which gradually enlarge in diameter from the minute layer toward the other side of the membrane, or a compound membrane which has an extremely thin activating layer formed on the minute layer of the asymmetrical membrane with a different material. Materials which can be used for the membrane include cellulose acetate polymers, polyamide, polyester, polyimide, vinyl polymers, and other like polymer materials. A representative reverse osmosis membrane comprising a compound membrane having an asymmetrical membrane of an acetate cellulose or polyamide and an activation layer of polyamide or polyurea, and a compound membrane having an activation layer of aromatic polyamides, is preferably used. Of these, compound films of aromatic polyamides are particularly preferable, since stable performance is manifested even under change in water quality, and harmful substances such as trihalomethane and like environmental hormones can be suitably removed.

As with the nanofiltration membrane, forms of the reverse osmosis membrane which can be used include spiral-wound elements, plate-and-frame elements, tubular elements, and hollow fiber membrane elements, and although any form may be used, a spiral-wound element is preferably used from the perspective of operability. The number of elements can be arbitrarily set according to the performance of the membrane, and in the event of using spiral-wound elements, the number of elements to be serially set in a pressure vessel to provide a single module is preferably around 4 to 6.

Moreover, with regard to the performance of the reverse osmosis membrane element, an arrangement is preferable wherein the percentage removal of salt (TDS (Total Dissolved Solids): evaporation residue concentration) is 99% or higher, and the film permeate flow is within the range of 0.3 to 1.5 $m^3/m^2/d$, under the conditions of filtering seawater of 3.5% total salinity at 25°C with operating pressure of 5.5 MPa and recovery of 13% for reverse osmosis separation, since the water quality of the permeate water is good and permeate water can be obtained effectively.

With regard to the percentage permeate water recovery of the above-described reverse osmosis membrane module unit 9, the higher this is the higher is the overall recovery, which is desirable, but in the event that this is too high the necessary operating pressure becomes high and the water quality of the obtained permeate water also becomes poor, so this is not economical. Moreover, setting the recovery low improves the water quality of the obtained permeate water, but the amount of water obtained is less and the overall recovery drops, so this is not economical. Accordingly, the ratio of the amount of the permeate water from, to the amount of water supplied to, the reverse osmosis membrane module unit is suitably 70 to 85%.

In addition, in order to efficiently operate the reverse osmosis membrane module unit 9 with a predetermined percentage recovery, an arrangement such as shown in Fig. 2 is preferably used, wherein multiple reverse osmosis membrane module components are disposed in sub-stages, with a first sub-stage reverse osmosis membrane module component 9a supplying concentrate water to a second sub-stage reverse osmosis membrane module component 9b, thereby obtaining permeate water. In the particular embodiment shown in Fig. 2, two such first sub-stage reverse osmosis membrane module components in parallel supply a single second sub-stage reverse osmosis membrane module component. At this time, the relation between the total membrane surface area S2(n) of the or each first sub-stage reverse osmosis membrane module component 9a and the membrane surface area S2 (n + 1) of the or each second sub-stage reverse osmosis membrane module component 9b is preferably in a range given by the following expression (2)

$$1.67 \leq S2(n) / S2(n + 1) \leq 2.5 \tag{2}.$$

As described above, setting the membrane area of the first and second sub-stage reverse osmosis membrane module component enables the membrane surface flow speed at the second stage membrane module component to be increased, so deterioration in separation performance due to concentration polarization phenomena at the reverse osmosis membrane surface is suppressed, thereby enabling the water quality of the permeate water to be kept high even with high recovery, and reduction in the amount of permeate water due to drop in the effective pressure due to concentration polarization can be suppressed. With ranges other than that specified in the Expression (2), the permeate water quality or amount of water produced may deteriorate because the membrane surface flow speed which can be secured may be insufficient, or in the event that the flow speed is too fast the pressure loss within the module may become too great, and in this case there is the danger that the module may be deformed or damaged.

As for the number of sub-stages of the reverse osmosis membrane module unit, the greater is the number the more specifically the membrane surface flow speed can be set at each stage, so the filtration capabilities of the reverse osmosis membrane are readily manifested, but needlessly increasing the number makes the unit configuration complicated and increases costs, and accordingly is not economical. From this perspective, a practical number of sub-stages is around 2 to 4.

At any given sub-stage, a plurality of reverse osmosis membrane module components may be arranged in parallel and the water supply thereto may be divided between them. For example, as shown in Fig. 2, there are two such module components at the first sub-stage and the concentrate water from each of these is led to a single module component at the second sub-stage. Irrespective of the number of module components at each sub-stage, the permeate from modular components in earlier sub-stages preferably by-passes all subsequent module components downstream thereof and is led into a permeate flow line from a final sub-stage module component.

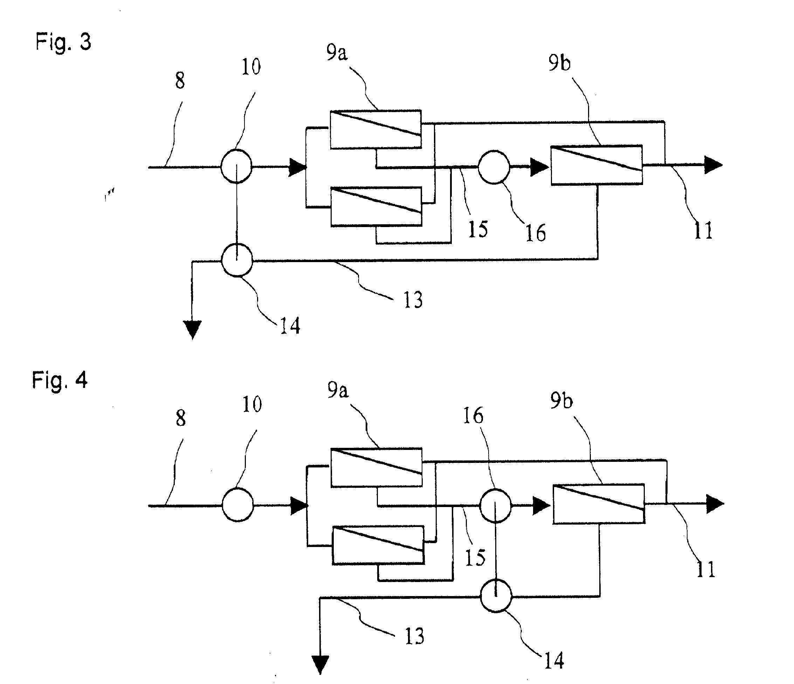

With regard to the operating pressure of the reverse osmosis membrane module components at each sub-stage, permeate water can be obtained in a sufficiently effective manner by operating the second sub-stage reverse osmosis membrane module component with only the operating pressure of the supplied water from the first sub-stage module component, without providing separate boosting means, but an arrangement wherein boosting means 16 for boosting the pressure of the concentrate water in the concentrate water channel 15 between the first sub-stage reverse osmosis membrane module component 9a and the second sub-stage reverse osmosis membrane module component 9b of the reverse osmosis module unit as shown in Fig. 3 to raise the operating pressure and thus supply the concentrate water to the second sub-stage reverse osmosis membrane module component to obtain permeate water is even more preferable, since the separating efficiency of the reverse osmosis membrane module components at each sub-stage is further raised, and permeate water can be obtained economically. At this time, with regard to the operating pressure at each sub-stage, the relation between the operating pressure $P(n)$ of the first sub-stage reverse osmosis membrane module component and the operating pressure $P(n + 1)$ of the second sub-stage reverse osmosis membrane module component is preferably in a range given by the following expression (3)

$$1.15 \leq P(n + 1) / P(n) < 1.8 \tag{3}$$

Moreover, in the event that the total salinity of the seawater is 3.5% for example, an operating pressure of 5.5 to 7.0 MPa is necessary for the reverse osmosis membrane module at recovery of 40%, and 8.5 to 10.0 MPa at recovery of 60%, but with the present invention, the total salinity of the seawater supplied to the reverse osmosis membrane module has been reduced to around 2.0 to 3.1% by the nanofiltration membrane, so the operating pressure can be set lower than normal for the same recovery. Specific operating pressure is selected as appropriate according to the concentration of the feed water, adjustment of the total salinity at the nanofiltration membrane module unit 3, and recovery at the reverse osmosis membrane module unit 9; however, in the event that, for example, seawater with total salinity of 3.5% is adjusted with the nanofiltration membrane module unit 3, for seawater with total salinity of 2.5% to be supplied to the reverse osmosis membrane module unit 9 for recovery of 80%, the operating pressure is suitably set within the range of 8.0 to 9.5 MPa.

Various types of pump can be used for the high-pressure pump 10 for the reverse osmosis membrane module unit 9, such as centrifugal pumps, volute pumps, turbine pumps and plunger pumps. Moreover, for the boosting means 16 in the event of providing multiple reverse osmosis membrane module sub-stages and boosting the pressure of the concentrate water from the first sub-stage reverse osmosis membrane module component, booster pumps such as centrifugal pumps or volute pumps can be used.

In addition, as described above, the operating pressure of the reverse osmosis membrane module unit 9 is extremely high, around 8.0 to 9.5 MPa for example, and the concentrate water discharged from the unit also has around the same pressure. Accordingly, as shown in Figs. 2 and 3, energy recovery means 14 are preferably disposed to recover the pressure energy of the concentrate water. Various methods are available as energy recovery methods, such as reversal pumps, Pelton turbines, turbochargers and pressure converters, and any method may be used.

Another method for recovering energy is an arrangement wherein, as shown in Fig. 4, energy recovery means 14 are disposed to boost the pressure of the concentrate water at the first sub-stage of the plurality of reverse osmosis membrane module sub-stages. In this case, a turbocharger is used as the energy recovery device (disclosed in, e.g., JP-A-01-294903), which is preferable since the configuration of the apparatus and the operation method are simplified.

The apparatus is preferably operated such that the final amount of the permeate water obtained by the reverse osmosis membrane module unit 9, expressed as a percentage of the amount of feed water is in the range of 60% to 80%, more preferably 65% to 75%.

Now, at the concentrate water side of the nanofiltration membrane and the reverse osmosis membrane, increased concentration of the salinity is also accompanied by increased concentration of calcium ions and sulfuric acid ions, which are scale components. At this time, in the event that the concentration of both ions increases, these precipitate on the membrane surface as calcium sulfate scales, which causes deterioration in membrane performance. We have confirmed by experimentation that the limit ion concentration which causes precipitation of calcium sulfate scales is approximately 1200 mg/l for calcium ions and approximately 2900 mg/l for sulfuric acid ions, and there is no danger of precipitation of scales on the membrane surface so long as the ion concentrations do not both exceed the above values at the same time.

In accordance with the present invention, the operating conditions of the nanofiltration membrane module unit and the mixture ratio with the bypassed feed water may be adjusted and the operating conditions of the reverse osmosis membrane module unit such as recovery may be set such that precipitation of calcium sulfate scales does not occur at the reverse osmosis membrane surface, so there is no problem whatsoever with regard to scale precipitation at the reverse osmosis membrane module. On the other hand, at the nanofiltration membrane module side, there is a great difference in the removal percentage of calcium ions depending on the capabilities of the nanofiltration membrane used, as described above. Accordingly, while precipitation of scales at the nanofiltration membrane surface does not readily occur with nanofiltration membranes wherein the calcium ion removal percentage is relatively low, since the calcium ion concentration at the concentration side of the nanofiltration membrane does not readily become high even in the event of high recovery ratio, but with nanofiltration membranes wherein the calcium ion removal percentage is high, there is the danger of the calcium ion concentration at the concentration water side of the nanofiltration membrane surface becoming high and precipitation of calcium sulfate scales occurring. Accordingly, when using such nanofiltration membranes wherein the calcium ion removal percentage is high, a scale precipitation preventing agent is preferably added to the supply feed water for the nanofiltration membrane module unit, and the apparatus thus operated.

As for the position for injecting the scale prevention agent, less scale prevention agent needs to be added in the event of injecting immediately before the nanofiltration membrane module unit following splitting the bypass, as indicated by reference numeral 17 in Fig. 1, as compared with injecting the scale prevention agent directly into the feed water so that the scale prevention agent is introduced into the bypass side as well, and thus this arrangement is preferable.

As for the type of scale prevention agent, any may be used so long as precipitation of calcium sulfate scales can be prevented. However, from the perspective of price and effectiveness, polyphosphates such as sodium hexametaphosphate (SHMP), organic monomers such as represented by ethylenediaminetetraacetic acid (EDTA), organic polymers such as polyacrylic or alginic acid, are preferably used.

As for the scale prevention agent injecting means, there is no particular restriction on the mode as long as a constant amount can be injected into the supplied water, but injecting into the suction side (low-pressure side) of the pressurizing pump for the nanofiltration membrane module using a diaphragm pump or a gear pump is preferable, since injection can be performed accurately and efficiently.

Moreover, although the present invention can be applied to various types of water as the feed water 1, such as river water, lake and marsh water, underground water and industrial waste water, processing seawater or highly concentrated brackish water is preferable, since the characteristics thereof, such as high recovery and economic efficiency, can be exhibited.

The Silt Density Index (SDI value), which is an index indicating the impurity of the feed water, is preferably controlled to 4 or lower. With water having an SDI value of 4 or lower, there is hardly any fouling wherein suspended matter adheres to the nanofiltration membrane or the reverse osmosis membrane surface, so the apparatus can be operated in a stable manner for a long period. Note that the SDI value indicates the concentration of minute suspended matter in water, and is expressed by $(1 - T_0/T_{15}) \times 100/15$, wherein $T_0$ represents the amount of time required to filter the first 500 ml of sample water when performing pressurized filtration at 0.2 MPa using a microfiltration membrane of 0.45 $\mu$m, and $T_{15}$ represents the amount of time required to filter another 500 ml of sample water following 15 minutes of filtering after $T_0$, under the same conditions. Water with no suspended matter at all yields 0, and the maximum value for the most impure water is 6.67.

The clarifying means 2 for controlling the SDI of the feed water to 4 or lower is not particularly restricted as to the method thereof, but preferably used are, for example, commonly-used condensation sedimentation or condensation sand filtration processing, polishing filtration, or other such filtration. Furthermore, performing filtration using a microfiltration membrane module or an ultrafiltration membrane module is even more preferable, since contamination at the nanofiltration membrane module and the reverse osmosis membrane module due to suspended matter, microorganisms, etc., can be reduced, operation can be stabilized, and the lifetime of the membrane element can be extended. Now, a microfiltration membrane is a separating membrane which has narrow holes within the range of 0.1 to 1 μm, for permeating water and dissolved components but removing suspended matter, fine particles, and microorganisms, 0.1 μm or larger. An ultrafiltration membrane is a separating membrane which has narrow holes in the range of 0.01 to 0.1 μm, for permeating water and dissolved components but removing organic polymers, suspended material, fine particles, viruses, and microorganisms, 0.1 μm or larger. With the present invention, the microfiltration membrane or ultrafiltration membrane may be formed of any material and may be of any form, so long as the membrane has the above functions or narrow holes. In either case, examples of the material which can be used for the membrane include organic polymer membranes such as polyacrylonitrile, polysulfone, polyvinylidene fluoride, polyethylene, polypropylene, polyethersulfone and cellulose acetate polyimide, and ceramic membranes such as alumina, zirconia and alumina-silicas, and the form thereof may be tube-shaped membranes such as hollow fiber, tubular or monolith, or planar members such as spiral or plate-and-frame.

Moreover, beside the above arrangements using the filtering processes, in the event that deep-sea water from depths of 200 m or more is used, or water is taken using sand on the seafloor as a filter, a filtration processing device is not necessary, so such arrangements are preferable as well.

Preferred embodiments of the present invention will now be described in more detail with reference to the following Examples and Comparative Examples.

Examples 1-10 and Comparative Examples 1-5

The effects of nanofiltration upon recovery ratio and operating pressure were evaluated. The desalination apparatus shown in Fig. 1 with two stages of membrane modules arranged serially was constructed using a nanofiltration membrane module and a reverse osmosis membrane module.

For the nanofiltration membrane module, an element 4 inches in diameter with membrane area of 7.0 $m^2$ was fabricated, and 4 to 6 of such elements were placed in a pressure vessel to provide the membrane module. The nanofiltration membrane module used had capabilities of total desalination of approximately 62%, percentage of removal of calcium ions of approximately 53%, percentage of removal of sulfuric acid ions of approximately 97%, and water production of approximately 4.9 $m^3$/d, under the conditions of filtering at 25°C seawater of approximately 3.5% total salinity having a pH of 6.5, calcium ion concentration of approximately 350 mg/l and sulfuric acid ion concentration of approximately 2100 mg/l, with operating pressure of 1.5 MPa and recovery of 13%. In addition, for the reverse osmosis membrane module, an element 4 inches in diameter with membrane area of 7.0 $m^2$ was fabricated in the same manner as with the nanofiltration membrane and 6 to 8 of such elements were placed in a pressure vessel to provide the membrane module. The reverse osmosis membrane module used had capabilities of total desalination of 99.7% and water production of approximately 5.0 $m^3$/d, under the conditions of filtering at 25°C seawater of approximately 3.5% total salinity having a pH of 6.5 with operating pressure of 5.5 MPa and recovery of 13%. To this desalination apparatus was supplied seawater with SDI value adjusted to the range of 2.5 to 3.5 with a microfiltration membrane device, the seawater having approximately 3.5% total salinity, and calcium ion concentration of approximately 350 mg/l and sulfuric acid ion concentration of approximately 2100 mg/l. The seawater was processed with the nanofiltration membrane module unit, the filtered water was either used as is or mixed with bypassed seawater, and water to be supplied to the reverse osmosis membrane module unit having the salinity and calcium ion concentration shown in Table 1 was thus prepared and supplied to the reverse osmosis membrane modules under the operating conditions shown as Examples 1-10 in Table 1. On the other hand, as Comparative Examples, a desalination apparatus exactly the same as that of the Examples was used and seawater desalination was performed under operating conditions outside of the ranges of the present invention, as indicated by Comparative Examples 1-5 in Table 1, and performances were evaluated after 24 hours of operation.

As a result, while the procedures of the Examples allowed the reverse osmosis membrane modules to be operated with relatively low operating pressure and high recovery, obtaining fresh water with good quality, those of the Comparative Examples presented problems such as insufficient recovery due to generation of scales at the surface of the reverse osmosis membrane, requiring higher operating pressure to obtain fresh water with the same recovery as with the Examples, or only allowing operation with lower recovery as compared with that of the Examples under the same operating pressure of the reverse osmosis membrane.

In addition, the calcium ion concentration of the concentrate water of the nanofiltration membrane and the concentrate water of the reverse osmosis membrane was analyzed with the ICP emission spectral analysis stipulated in JIS K0101, and the sulfuric acid ion concentration was analyzed with the ion chromatography also stipulated in JIS K0101. The analysis showed that with the concentrate water for Examples 1-10 and Comparative Examples 1-3, the concentration was below the calcium sulfate scale precipitation limit, and the fact that there was no precipitation of scales in the concentrate water was confirmed, but with the arrangement wherein no nanofiltration processing was performed and reverse osmosis processing was performed at high recovery (fifth comparative example), the calcium ion concentration and sulfuric acid ion concentration of the reverse osmosis membrane module reached or exceeded the scale precipitation limit at the same time, and the fact that there was precipitation of calcium sulfate scales in the concentrate water was confirmed.

Examples 11-13

The effect of a scale preventing agent was evaluated where a nanofiltration membrane having high calcium removal is used. The same apparatus as Example 1 was used, except that the nanofiltration membrane module used had capabilities of total desalination of approximately 65%, a higher percentage of removal of calcium ions of approximately 72%, percentage of removal of sulfuric acid ions of approximately 99%, and water production of approximately 4.8 $m^3$/d, under the conditions of filtering at 25°C seawater of approximately 3.5% total salinity having a pH of 6.5, calcium ion concentration of approximately 350 mg/l and sulfuric acid ion concentration of approximately 2100 mg/l, with operating pressure of 1.5 MPa and recovery of 13%. With the Examples shown in Table 1, sodium hexametaphosphate as a scale prevention agent was added to the supplied feed water for the nanofiltration membrane module at the ratio shown in Examples 11-13, and desalination was performed under the conditions shown in Table 1. As a result, with Examples 11-13, no scaling occurred though the calcium ion concentration in the concentrate water at the nanofiltration membrane module was high, due to the scale prevention agent. Accordingly, nanofiltration processing could be performed at high recovery while the reverse osmosis membrane module was also operated well at high recovery with no scales being generated.

Example 14

The effects of respective multi-stage arrangements in a nanofiltration module unit and a reverse osmosis module unit was evaluated. Using eight of the same nanofiltration membrane elements as in Example 1, two sets of three elements were placed in respective pressure vessels to form respective nanofiltration membrane modules which were used as first sub-stage module components and one set of two elements was placed in a pressure vessel to form a nanofiltration membrane module which was used as a single second stage module component, thereby configuring a nanofiltration membrane module unit, and, using twelve of the same reverse osmosis membrane elements as in Example 1, three sets of four were placed in respective pressure vessels to form reverse osmosis membrane modules of which two were used as respective first sub-stage module components and one was used as a second sub-stage module component, thereby configuring a reverse osmosis membrane module unit, and thereby configuring the desalination apparatus shown in Fig. 2.

To this desalination apparatus was supplied seawater with SDI value adjusted to the range of 3 to 4 with a condensation sand filtration device, the seawater having approximately 3.5% total salinity, and calcium ion concentration of approximately 350 mg/l and sulfuric acid ion concentration of approximately 2100 mg/l. Of this, 70 $m^3$/d, which was 70% thereof was supplied to the nanofiltration membrane module unit, and subjected to nanofiltration processing at operating pressure of 2.5 MPa at 25°C, whereupon the nanofiltration membrane module unit yielded 57.7 $m^3$/d of permeate water with 2.07% total salinity, and calcium ion concentration of 239 mg/l and sulfuric acid ion concentration of 133 mg/l, at a recovery ratio of 82.4%. Next, the permeate water obtained from the nanofiltration membrane module unit was mixed with the remaining 30% of feed water in a static mixer, yielding volume of 87.7 $m^3$/d having 2.56% total salinity, and calcium ion concentration of 276 mg/l and sulfuric acid ion concentration of 805 mg/l.

Next, the adjusted seawater was supplied to the reverse osmosis membrane module unit, and all subjected to reverse osmosis separation at an operating pressure of 9.0 MPa, thereby yielding 70 $m^3$/d of produced water at a recovery ratio of 80%, which was fresh water having 226 mg/l total salinity as water quality of the permeated water. At this time, the total recovery of the reverse osmosis membrane module permeation water from the 100 $m^3$/d of the feed water supplied to the desalination apparatus was 70%.

Furthermore, continuous operation was performed for approximately three months under the above operating conditions, and the flow of fresh water from the reverse osmosis membrane module unit, the water quality, recovery, operating pressure, etc., were almost the same as when starting operation, i.e., no deterioration in performance was observed.

Example 15

The effect of a multi-stage arrangement in a reverse osmosis module unit with increasing pressure of the first stage concentrate was evaluated. A desalination apparatus was configured in the same manner as that in Example 14, except that a centrifugal boosting pump was disposed in the concentrate water channel of the first stage reverse osmosis membrane module, thereby configuring the reverse osmosis membrane module shown in Fig. 3.

To this desalination apparatus was supplied seawater with SDI value adjusted to 1.5 or lower with an ultrafiltration membrane device, the seawater having approximately 3.5% total salinity, and calcium ion concentration of

approximately 350 mg/l and sulfuric acid ion concentration of approximately 2100 mg/l. Nanofiltration processing was performed under the same conditions as with Example 14, and mixed with the bypassed feed water, thereby preparing feed water of the same composition and amount as that in Example 14 to be supplied to the reverse osmosis membrane module unit.

Next, all of the adjusted seawater was supplied to the reverse osmosis membrane module unit, and subjected to reverse osmosis separation at an operating pressure of 6.5 MPa for the first stage reverse osmosis membrane module component, and operating pressure of 9.0 MPa for the second stage reverse osmosis membrane module component, thereby yielding 66 $m^3$/d of produced water at a recovery ratio of 75%, which was fresh water having 174 mg/l total salinity as water quality of the permeated water. At this time, the total recovery of the reverse osmosis membrane module permeation water from the 100 $m^3$/d of feed water supplied to the desalination apparatus was 66%.

Furthermore, continuous operation was performed for approximately three months under the above operating conditions, and the flow of fresh water from the reverse osmosis membrane module unit, the water quality, recovery, operating pressure, etc., were almost the same as when starting operation, i.e., no deterioration in performance was observed.

EFFECT OF THE INVENTION

According to the present invention, fouling of the reverse osmosis membrane due to suspended matter and calcium scales can be suppressed, the reverse osmosis membrane can be operated at a high recovery ratio due to reduction in total salinity, and for example, fresh water can be produced from seawater in a stable manner with higher recovery at lower costs.

TABLE 1

| No. | | Feed water (m³/d) | Bypass ratio (%) | Nanofiltration membrane module unit | | | | | | | | |
|---|---|---|---|---|---|---|---|---|---|---|---|---|
| | | | | Supplied water | | | Number of elements | Permeated water (after 24 hours) | | | |
| | | | | Flow (m³/d) | Pressure (MPa) | Scale Preventing Agent (ml/l) | | Flow (m³/d) | Recovery (%) | Salinity (mg/l) | Ca²⁺ (mg/l) |
| Example | 1 | 40 | 0 | 40.0 | 2.5 | – | 6 | 35.4 | 88.6 | 22393 | 254 |
| | 2 | 40 | 0 | 40.0 | 2.5 | – | 6 | 35.4 | 88.6 | 22393 | 254 |
| | 3 | 40 | 10 | 36.0 | 2.0 | – | 6 | 29.8 | 82.8 | 20741 | 239 |
| | 4 | 40 | 10 | 36.0 | 2.0 | – | 6 | 29.8 | 82.8 | 20741 | 239 |
| | 5 | 45 | 20 | 36.0 | 2.5 | – | 5 | 30.6 | 85.1 | 21397 | 245 |
| | 6 | 50 | 30 | 35.0 | 2.5 | – | 5 | 30.3 | 86.5 | 21796 | 249 |
| | 7 | 55 | 40 | 33.0 | 2.0 | – | 5 | 25.8 | 78.1 | 19782 | 230 |
| | 8 | 70 | 50 | 35.0 | 2.5 | – | 5 | 30.3 | 86.5 | 21796 | 249 |
| | 9 | 75 | 60 | 30.0 | 2.5 | – | 4 | 25.0 | 83.5 | 21067 | 242 |
| | 10 | 100 | 70 | 30.0 | 2.5 | – | 4 | 25.0 | 83.5 | 21067 | 242 |
| | 11 | 40 | 0 | 40.0 | 2.5 | 1.0 | 6 | 34.7 | 86.8 | 20534 | 176 |
| | 12 | 50 | 30 | 35.0 | 2.0 | 0.5 | 6 | 28.9 | 82.5 | 19383 | 165 |
| | 13 | 100 | 70 | 30.0 | 2.5 | 1.5 | 5 | 27.4 | 91.4 | 22340 | 195 |
| Comparative Example | 1 | 150 | 80 | 30.0 | 2.5 | – | 4 | 25.0 | 83.5 | 21067 | 242 |
| | 2 | 150 | 80 | 30.0 | 2.5 | – | 4 | 25.0 | 83.5 | 21067 | 242 |
| | 3 | 150 | 85 | 22.5 | 2.0 | – | 4 | 19.5 | 86.7 | 21974 | 250 |
| | 4 | 40 | 100 | – | – | – | – | – | – | – | – |
| | 5 | 40 | 100 | – | – | – | – | – | – | – | – |

Feed water — Salinity concentration: 34987 mg/l, $Ca^{2+}$ concentration: 350 mg/l, $SO_4^{2-}$ concentration: 2100 mg/l, Temperature: 25°C, pH: 6.5

Nanofilter membrane element performance — Desalination percentage: 62 %, $Ca^{2+}$ removal percentage: 53 %, $SO_4^{2-}$ removal percentage: 97 %, Amount of fresh water generated: 4.9 m³/d
[Evaluated under above feed water conditions and pressure of 1.5 MPa]

Table 1 (continued)

| Concentrated water (after 24 hours) | | | Supplied water (nano-filtered + bypassed feed water) | | | | Number of elements | Permeated water (after 24 hours) | | | Concentrate water (after 24 hours) | | | Total recovery (%) |
|---|---|---|---|---|---|---|---|---|---|---|---|---|---|---|
| Ca²⁺ | SO₄²⁻ | Scales | Flow | Salinity | Ca²⁺ | Pressure | | Flow | Recovery | Salinity | Ca²⁺ | SO₄²⁻ | Scales | |
| (mg/l) | (mg/l) | (presence) | (m³/d) | (mg/l) | (mg/l) | (MPa) | | (m³/d) | (%) | (mg/l) | (mg/l) | (mg/l) | (presence) | |
| 1092 | 17190 | None | 35.4 | 22393 | 254 | 8.5 | 6 | 28.0 | 79.0 | 269 | 1191 | 731 | None | 70.0 |
| 1092 | 17190 | None | 35.4 | 22393 | 254 | 9.2 | 6 | 29.5 | 83.3 | 301 | 1492 | 903 | None | 73.8 |
| 884 | 11565 | None | 33.8 | 22428 | 252 | 8.4 | 6 | 26.7 | 79.0 | 283 | 1184 | 1732 | None | 66.8 |
| 884 | 11565 | None | 33.8 | 22428 | 252 | 9.2 | 6 | 27.8 | 82.2 | 312 | 1400 | 2030 | None | 69.5 |
| 850 | 13300 | None | 39.6 | 24485 | 269 | 8.7 | 6 | 30.5 | 77.0 | 250 | 1160 | 2547 | None | 67.8 |
| 998 | 14610 | None | 45.3 | 26171 | 282 | 9.0 | 6 | 34.4 | 75.9 | 234 | 1176 | 3306 | None | 69.0 |
| 779 | 9161 | None | 47.8 | 26789 | 285 | 8.7 | 8 | 36.3 | 75.9 | 289 | 1188 | 4303 | None | 66.0 |
| 998 | 14610 | None | 32.7 | 28876 | 303 | 9.0 | 6 | 24.5 | 74.9 | 361 | 1190 | 4765 | None | 70.0 |
| 897 | 12023 | None | 35.0 | 30018 | 311 | 9.0 | 6 | 25.9 | 74.0 | 343 | 1197 | 5378 | None | 69.1 |
| 897 | 12023 | None | 47.5 | 31329 | 322 | 9.0 | 8 | 34.7 | 73.1 | 329 | 1185 | 5852 | None | 69.4 |
| 1492 | 15660 | None | 34.7 | 20534 | 176 | 9.0 | 6 | 28.5 | 82.1 | 290 | 980 | 221 | None | 71.3 |
| 1222 | 11843 | None | 43.9 | 24722 | 228 | 9.0 | 8 | 34.9 | 79.5 | 333 | 1142 | 3708 | None | 69.8 |
| 2001 | 23937 | None | 48.7 | 31436 | 306 | 9.2 | 8 | 35.6 | 73.1 | 323 | 1178 | 5854 | None | 71.2 |
| 897 | 12023 | None | 48.3 | 32594 | 331 | 10.1 | 6 | 34.8 | 72.0 | 272 | 1183 | 6290 | None | 69.6 |
| 897 | 12023 | None | 48.3 | 32594 | 331 | 9.0 | 6 | 31.9 | 66.0 | 234 | 973 | 5172 | None | 63.8 |
| 998 | 14772 | None | 49.0 | 33272 | 337 | 9.0 | 6 | 31.3 | 63.9 | 233 | 936 | 5110 | None | 62.7 |
| - | - | - | 40.0 | 34990 | 350 | 9.0 | 6 | 24.5 | 61.3 | 307 | 901 | 5414 | None | 61.3 |
| - | - | - | 40.0 | 34990 | 350 | 11.5 | 6 | 27.6 | 69.0 | 307 | 1241 | 7442 | Present | 69.0 |

| | |
|---|---|
| Reverse osmosis membrane element performance | Desalination percentage: 99.7%, Amount of fresh water generated: 5.0 m³/d [Evaluated under above feed water conditions and pressure of 5.5 MPa] |
| Scale preventing agent | Sodium hexametaphosphate |

## Claims

1. A method of desalinating water in a plurality of stages at which respective membrane module units are disposed, wherein permeate water from a first stage membrane module unit is supplied to a second stage membrane module unit to obtain desalinated permeate water therefrom, the method comprising:

a first step of processing feed water having a total salt concentration of 3.0 to 4.8 % by weight and a calcium ion concentration of 200 to 500 mg/l, in which first step at least a proportion of the feed water is treated with the first stage membrane module unit, to obtain the permeate water and which permeate water is optionally mixed with additional feed water, the water thus processed in the first step thereby having a total salt concentration of 55 to 90% of that of the feed water and a calcium ion concentration of 95% or less of that of the feed water; and
a second step of supplying the water processed by the first step to the second stage membrane module unit, thereby obtaining the desalinated water.

2. A method according to Claim 1, wherein the feed water has a sulphate ion concentration of 1500 to 3500 mg/l and the sulphate concentration is adjusted to 80% or less of that of the feed water by the first step.

3. A method according to Claim 1 or Claim 2, wherein 30 to 100% of the amount of the feed water is treated with the first stage membrane module unit, and then mixed with untreated feed water and supplied to the second stage membrane module unit.

4. A method according to Claim 3, wherein 35 to 95% of the amount of the feed water is treated with the first stage membrane module unit, and then mixed with untreated feed water and supplied to the second stage membrane module unit.

5. A method according to Claim 4, wherein 40 to 90% of the amount of the feed water is treated with the first stage membrane module unit, and then mixed with untreated feed water and supplied to the second stage membrane module unit.

6. A method according to any preceding Claim, carried out such as to provide, from the water supplied to the first stage membrane module unit, permeate water and concentrate water, the amount of permeate water, expressed as a percentage of the total amount of water supplied, being within the range of 65% to 95%.

7. A method according to Claim 6, wherein the said percentage amount of permeate water is within the range of 75% to 90%.

8. A method according to Claim 1, carried out such as to provide, from the water supplied to the second stage membrane module unit, permeate water and concentrate water, the percentage amount of permeate water, expressed as a percentage of the total amount of water supplied, being within the range of 70% to 85%.

9. A method according to any preceding Claim, carried out such that the total amount of permeate water from the second stage membrane module unit, expressed as a percentage of the amount of feed water (so-called total recovery ratio), is within the range of 60% to 80%.

10. A method according to Claim 9, wherein the said percentage amount of permeate water from the second stage membrane module unit is within the range of 65% to 75%.

11. A method according to any preceding Claim, wherein a nanofiltration membrane unit is used for the first stage membrane module unit and a reverse osmosis membrane unit is used for the second stage membrane module unit.

12. A method according to Claim 11, wherein the first stage nanofiltration membrane module unit has at least first and second membrane components at respective first and second sub-stages of the first stage, each said membrane component providing permeate water and concentrate water and wherein concentrate water from a first sub-stage nanofiltration membrane module component is supplied to a second sub-stage nanofiltration membrane module component.

13. A method according to Claim 11 or Claim 12, wherein the second stage reverse osmosis membrane module unit has at least first and second membrane components at respective first and second sub-stages of the second stage, each said membrane component providing permeate water and concentrate water and wherein concentrate water from a first sub-stage reverse osmosis membrane module component is supplied to a second sub-stage reverse osmosis membrane module component.

14. A method according to Claim 13, wherein the pressure of concentrate water from the first sub-stage reverse osmosis membrane module component is boosted and the concentrate water then supplied to the second sub-stage reverse osmosis membrane module component to obtain desalinated water.

15. A method according to Claim 14, wherein, in a plurality of sub-stages at which reverse osmosis membrane module components are disposed, the relation between the operating pressure $P(n)$ of the first sub-stage reverse osmosis membrane module component and the operating pressure $P(n + 1)$ of the second sub-stage reverse osmosis membrane module component is in a range given by the expression

$$15 \leq P(n + 1) / P(n) \leq 1.8.$$

16. A method according to any one of Claims 11 to 15, wherein a scale prevention agent is injected into the water supplied to the nanofiltration membrane module unit before performing nanofiltration.

17. A method according to any preceding Claim, wherein the feed water is filtered water processed with a microfiltration membrane or an ultrafiltration membrane.

18. A desalination apparatus comprising:

at least first and second membrane module units at respective successive first and second stages for water permeation,

as a said first membrane unit at the first stage, a nanofiltration membrane module unit having a membrane module and an outlet channel for water permeated thereby,

as a said second membrane unit at the second stage, a reverse osmosis membrane module unit disposed in the outlet channel of the nanofiltration membrane module unit, for permeated water; and

means for diverting a proportion of feed water supplied to the nanofiltration membrane module unit directly to the said outlet channel thereof so as to bypass the membrane module thereof.

19. A desalination apparatus according to claim 18, wherein the outlet channel of the nanofiltration membrane module unit has means for mixing the said diverted proportion of feed water with water permeated by the nanofiltration membrane module unit at the first stage upstream of the reverse osmosis membrane module unit at the second stage.

20. A desalination apparatus according to Claim 18 or Claim 19, wherein the first stage membrane module unit is a nanofiltration membrane module unit having at least one first membrane component and at least one second membrane component at respective successive first and second sub-stages of the said first stage, each said membrane component being capable of providing permeate water and concentration water and wherein a second sub-stage nanofiltration membrane module component is disposed in a concentrate water outlet channel of a first sub-stage nanofiltration membrane module component.

21. A desalination apparatus according to Claim 20, wherein the relation between the total membrane surface area $S1(n)$ of the or each said first sub-stage nanofiltration membrane module component and the total membrane surface area $S1(n + 1)$ of the or each said second sub-stage nanofiltration membrane module component is in a range given by the expression

$$1.5 \leq S1(n) / S1(n + 1) \leq 5.$$

22. A desalination apparatus according to Claim 20 or Claim 21, wherein the second stage membrane module unit is a reverse osmosis membrane module unit having at least one first membrane component and at least one second membrane component at respective successive first and second sub-stages of the said second stage, each said membrane component being capable of providing permeate water and concentrate water, and wherein a second sub-stage reverse osmosis membrane module component is disposed in a concentrate water outlet channel of a first sub-stage reverse osmosis membrane module component.

23. A desalination apparatus according to Claim 22, wherein the relation between the total membrane surface area $S2(n)$ of the or each said first sub-stage reverse osmosis membrane module component and the total membrane surface area $S2(n + 1)$ of the or each said second sub-stage reverse osmosis membrane component module is in a range given by the expression

$$1.67 \leq S2(n) / S2(n + 1) \leq 2.5.$$

**24.** A desalination apparatus according to Claim 22 or Claim 23, wherein boosting means for boosting the pressure of the concentrate water are disposed in the concentrate water outlet channel of at least a first reverse osmosis membrane module component at a first sub-stage of the second stage.

**25.** A desalination apparatus according to any one of Claims 18 to 24, wherein scale prevention agent injecting means are disposed in a feed water channel upstream of the nanofiltration membrane module unit.

**26.** A desalination apparatus according to any one of Claims 18 to 25, wherein a microfiltration membrane module unit or an ultrafiltration membrane module unit is disposed in a feed water channel upstream of the nanofiltration membrane module unit.

Fig. 1

Fig. 2

Fig. 3

Fig. 4

**European Patent Office**

## EUROPEAN SEARCH REPORT

Application Number

EP 02 25 0358

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 99 16714 A (SALINE WATER CONVERSION CORP ;HASSAN ATA M (US)) 8 April 1999 (1999-04-08) * abstract; claims 1,2,4-10; figures 2,7-9 * * page 2, line 6 - line 10 * * page 4, line 22 - page 5, line 19 * * page 7, line 7 - page 11, line 24 * * page 12, line 10 - page 20, line 8 * * tables 1,3-5 * | 1-3,6, 11-13 | C02F1/44 B01D61/02 |
| A | | 7-10,18 | |
| X | WO 01 14256 A (AWERBUCH LEON ;L E T LEADING EDGE TECHNOLOGIE (GB)) 1 March 2001 (2001-03-01) * abstract; claims 1-3,5,8,14,15,18-21; figure 1 * * page 2, line 1 - page 3, line 8 * * page 3, line 19 - line 24 * * page 4, line 17 - page 8, line 22 * * page 11, line 1 - line 12 * * page 11, line 21 - line 26 * * tables 3-5,7 * | 1-5,11, 12, 16-21, 25,26 | |
| Y | | 13-15, 22-24 | |

TECHNICAL FIELDS SEARCHED (Int.Cl.7)

C02F
B01D

-/--

The present search report has been drawn up for all claims

| Place of search | Date of completion of the search | Examiner |
|---|---|---|
| THE HAGUE | 28 June 2002 | Hoornaert, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

**EUROPEAN SEARCH REPORT**

Application Number

EP 02 25 0358

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | PATENT ABSTRACTS OF JAPAN vol. 1997, no. 10, 31 October 1997 (1997-10-31) -& JP 09 141260 A (AGENCY OF IND SCIENCE &AMP;TECHNOL), 3 June 1997 (1997-06-03) * abstract * * paragraphs '0004!-'0022!; tables * -& DATABASE WPI Derwent Publications Ltd., London, GB; AN 1997-345729 XP002203992 & JP 09 141260 A * abstract * -& DATABASE CA 'Online! CHEMICAL ABSTRACTS SERVICE, COLUMBUS, OHIO, US; retrieved from STN Database accession no. 127:113069 XP002091533 * abstract * --- -/-- | 1-3,6-12 | |

TECHNICAL FIELDS
SEARCHED     (Int.Cl.7)

The present search report has been drawn up for all claims

| Place of search | Date of completion of the search | Examiner |
|---|---|---|
| THE HAGUE | 28 June 2002 | Hoornaert, P |

**European Patent Office**

## EUROPEAN SEARCH REPORT

Application Number

EP 02 25 0358

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | HASSAN A M ET AL: "A new approach to membrane and thermal seawater desalination processes using nanofiltration membranes (Part 1)" DESALINATION, ELSEVIER SCIENTIFIC PUBLISHING CO, AMSTERDAM, NL, vol. 118, no. 1-3, 20 September 1998 (1998-09-20), pages 35-51, XP004139065 ISSN: 0011-9164 * abstract; figures 2,3,5,6,9,11; table 1 * * page 39, column 2 * * page 40, column 2, last line – page 47, column 1, paragraph 1 * * page 48, column 1, line 1 – column 2, paragraph 1 * * conclusions * | 1-3,6,8, 11-13 | |
| A | | 18, 20-23,25 | |
| | --- | | TECHNICAL FIELDS SEARCHED (Int.Cl.7) |
| X | HASSAN A M ET AL: "A demonstration plant based on the new NF-SWRO process" DESALINATION, ELSEVIER SCIENTIFIC PUBLISHING CO, AMSTERDAM, NL, vol. 131, no. 1-3, 20 December 2000 (2000-12-20), pages 157-171, XP004306348 ISSN: 0011-9164 * the whole document * | 1-3,6-13 | |
| | --- | | |
| | -/-- | | |

The present search report has been drawn up for all claims

| Place of search | Date of completion of the search | Examiner |
|---|---|---|
| THE HAGUE | 28 June 2002 | Hoornaert, P |

**European Patent Office**

**EUROPEAN SEARCH REPORT**

Application Number

EP 02 25 0358

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | AL-SOFI M A K ET AL: "Optimization of hybridized seawater desalination process" DESALINATION, ELSEVIER SCIENTIFIC PUBLISHING CO, AMSTERDAM, NL, vol. 131, no. 1-3, 20 December 2000 (2000-12-20), pages 147-156, XP004306347 ISSN: 0011-9164 * the whole document * | 1-3,8, 11, 16-18, 25,26 | |
| X | PATENT ABSTRACTS OF JAPAN vol. 2000, no. 21, 3 August 2001 (2001-08-03) -& JP 2001 113274 A (TOYOBO CO LTD), 24 April 2001 (2001-04-24) * abstract; claims; table 1 * * paragraphs '0001!-'0005!,'0013!,'0014!,'0021!,'0026! * -& DATABASE WPI Derwent Publications Ltd., London, GB; AN 2001-393034 XP002203993 & JP 2001 113274 A * abstract * | 1-3,11, 16 | |

TECHNICAL FIELDS SEARCHED (Int.Cl.7)

-/--

The present search report has been drawn up for all claims

| Place of search | Date of completion of the search | Examiner |
|---|---|---|
| THE HAGUE | 28 June 2002 | Hoornaert, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 02 25 0358

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | PATENT ABSTRACTS OF JAPAN vol. 1996, no. 12, 26 December 1996 (1996-12-26) -& JP 08 206460 A (TORAY IND INC), 13 August 1996 (1996-08-13) * abstract; figures 1,2 * * paragraphs '0004!-'0008!, '0019!-'0022!, '0032!, '0033!, '0038!, '0039!, '0045!, '0047!, '0050!-'0052! * -& DATABASE WPI Derwent Publications Ltd., London, GB; AN 1996-420279 XP002203994 & JP 08 206460 A * abstract * | 1-3,6,8, 9,11-14, 17 | |
| A | PATENT ABSTRACTS OF JAPAN vol. 011, no. 300 (C-449), 29 September 1987 (1987-09-29) -& JP 62 091287 A (HITACHI LTD), 25 April 1987 (1987-04-25) * abstract * -& DATABASE WPI Derwent Publications Ltd., London, GB; AN 1987-154004 XP002203995 & JP 62 091287 A * abstract * | 1 | **TECHNICAL FIELDS SEARCHED** (Int.Cl.7) |
| D,Y | EP 0 709 130 A (TORAY INDUSTRIES) 1 May 1996 (1996-05-01) * abstract; claims 1-5,12,13; figure 1 * * column 11, line 10 - line 57 * * example 2 * | 13-15, 22-24 | |

The present search report has been drawn up for all claims

| Place of search | Date of completion of the search | Examiner |
|---|---|---|
| THE HAGUE | 28 June 2002 | Hoornaert, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                          EP 02 25 0358

This annex lists the patent family members relating to the patent documents cited in the above-mentioned European search report.
The members are as contained in the European Patent Office EDP file on
The European Patent Office is in no way liable for these particulars which are merely given for the purpose of information.

28-06-2002

| Patent document cited in search report | | | Publication date | Patent family member(s) | | Publication date |
|---|---|---|---|---|---|---|
| WO 9916714 | A | | 08-04-1999 | AU 9584998 A | | 23-04-1999 |
| | | | | EP 1019325 A1 | | 19-07-2000 |
| | | | | WO 9916714 A1 | | 08-04-1999 |
| WO 0114256 | A | | 01-03-2001 | AU 6776900 A | | 19-03-2001 |
| | | | | EP 1206414 A1 | | 22-05-2002 |
| | | | | WO 0114256 A1 | | 01-03-2001 |
| JP 09141260 | A | | 03-06-1997 | JP 2920200 B2 | | 19-07-1999 |
| JP 2001113274 | A | | 24-04-2001 | NONE | | |
| JP 08206460 4 | A | | | NONE | | |
| JP 62091287 4 | A | | | NONE | | |
| EP 0709130 | A | | 01-05-1996 | JP 8108048 A | | 30-04-1996 |
| | | | | AT 218917 T | | 15-06-2002 |
| | | | | AU 691649 B2 | | 21-05-1998 |
| | | | | AU 3315295 A | | 26-04-1996 |
| | | | | CA 2160330 A1 | | 13-04-1996 |
| | | | | CN 1132108 A | | 02-10-1996 |
| | | | | EP 1161981 A2 | | 12-12-2001 |
| | | | | EP 0709130 A1 | | 01-05-1996 |
| | | | | KR 204608 B1 | | 15-06-1999 |
| | | | | US 6187200 B1 | | 13-02-2001 |

EPO FORM P0459

For more details about this annex : see Official Journal of the European Patent Office, No. 12/82